# EUROPEAN PATENT APPLICATION

(11) **EP 4 450 269 A1**
(43) Date of publication of application: **23.10.2024**
(21) Application number: 22906941.4
(22) Date of filing: 07.09.2022
(51) Int. Cl.: B29D 30/08

(54) **MANUFACTURING METHOD FOR RAW TIRE AND MANUFACTURING DEVICE FOR RAW TIRE**

(30) Priority: 14.12.2021 JP 2021202871
(71) Applicant: BRIDGESTONE CORPORATION, Chuo-ku Tokyo 104-8340 (JP)
(72) Inventor: NAKAMURA, Ichizou, Tokyo 104-8340 (JP)
(74) Representative: Marks & Clerk LLP
(86) International application number: PCT/JP2022/033622
(87) International publication number: WO 2023/112406

(57) **Abstract**

A method of manufacturing a raw tire of one aspect of the present disclosure includes: winding a strip-shaped body on a forming drum in a circumferential direction, and overlapping and joining together respective end portions of the strip-shaped body in a winding direction so as to form a joined portion; and layering a ribbon on the strip-shaped body by winding the ribbon on the strip-shaped body in a direction in which the ribbon runs up onto a step of an end portion that is positioned at a radial direction outer side among the respective end portions configuring the joined portion.

## Description

### Technical Field

The present disclosure relates to a method of manufacturing a raw tire and to a raw tire manufacturing device.

### Background Art

Japanese Patent Application Laid-Open (JP-A) No. 2012-228995 discloses a pneumatic tire for a motorcycle having at least one spiral belt layer formed by a spirally-wound structure that is formed by a ribbon-shaped strip being extended in the circumferential direction of the tire and wound in a spiral form.

### SUMMARY OF INVENTION

### Technical Problem

In pneumatic tires, and in pneumatic tires for motorcycles in particular, the center in the tire width direction is a shape that is curved so as to be convex toward the outer peripheral side. Namely, when viewing the tire in a cross-section that includes the tire central axis, the tread surface is curved in a shape that swells out toward the radial direction outer side.

When manufacturing the raw tire of a pneumatic tire having such a shape, there are cases in which a strip-shaped body (which is sometimes called a textile treatment) is wound in the circumferential direction on the outer periphery of an annular case (a forming drum), and further, a ribbon is wound on and layered on the wound strip-shaped body.

If the tire cross-section is a curved shape as described above, it is difficult to abut together and join together the respective end portions in the method of winding the strip-shaped body. Therefore, a structure of overlapping and joining the respective end portions in the method of winding the strip-shaped body is employed. However, when respective end portions in the method of winding the strip-shaped body are overlapped, a step is formed at the joined portion.

If the above-described step has been formed, at the time of winding and layering a ribbon onto the wound strip-shaped body, there is the concern that a gap, or so-called trapped air, will arise between the strip-shaped body and the ribbon due to the step.

An object of the present disclosure is to provide a method of manufacturing a raw tire and a raw tire manufacturing device that can reduce the amount of trapped air.

### Solution to Problem

A method of manufacturing a raw tire of one aspect of the present disclosure comprises: winding a strip-shaped body on a forming drum in a circumferential direction, and overlapping and joining together respective end portions of the strip-shaped body in a winding direction so as to form a joined portion; and layering a ribbon on the strip-shaped body by winding the ribbon on the strip-shaped body in a direction in which the ribbon runs up onto a step of an end portion that is positioned at a radial direction outer side among the respective end portions configuring the joined portion.

A raw tire manufacturing device of another aspect of the present disclosure comprises: a forming drum; a strip-shaped body winding device that winds a strip-shaped body onto the forming drum in a circumferential direction, and overlaps and joins together respective end portions of the strip-shaped body in a winding direction so as to form a joined portion; and a ribbon winding device that layers a ribbon on the strip-shaped body, which has been wound on the forming drum by the strip-shaped body winding device, by winding the ribbon on the strip-shaped body in a direction in which the ribbon runs up onto a step of an end portion that is positioned at a radial direction outer side among the respective end portions configuring the joined portion.

### Advantageous Effects of Invention

In the present disclosure, there are obtained a method of manufacturing a raw tire and a raw tire manufacturing device that can reduce the amount of trapped air.

### BRIEF DESCRIPTION OF DRAWINGS

Fig. 1 is a schematic drawing illustrating a raw tire manufacturing device of a first embodiment.
Fig. 2 is a cross-sectional view illustrating a raw tire manufactured by the raw tire manufacturing device of the first embodiment.
Fig. 3 is a schematic sectional view illustrating, in an enlarged manner, a joined portion of a textile treatment structured by the raw tire manufacturing device of the first embodiment.
Fig. 4 is a schematic drawing illustrating, in an enlarged manner, a portion of a ribbon winding device of the raw tire manufacturing device of the first embodiment.
Fig. 5 is a schematic sectional view illustrating, in an enlarged manner, a wound portion of a ribbon structured by the raw tire manufacturing device of the first embodiment.
Fig. 6 is a schematic sectional view illustrating, in an enlarged manner, an overlapping portion of the ribbon structured by the raw tire manufacturing device of the first embodiment.
Fig. 7 is a schematic sectional view illustrating, in an enlarged manner, a wound portion of the ribbon structured by a raw tire manufacturing device of a first comparative example.
Fig. 8 is a schematic sectional view illustrating, in an enlarged manner, a joined portion of the textile treatment structured by a raw tire manufacturing device of a second embodiment.
Fig. 9 is a schematic sectional view illustrating, in an enlarged manner, a joined portion of the textile treatment structured by a raw tire manufacturing device of a second comparative example.
Fig. 10 is a schematic drawing illustrating a modified example of the ribbon winding device relating to the technique of the present disclosure.
Fig. 11 is a cross-sectional view illustrating a product tire obtained from the raw tire illustrated in Fig. 2.
Fig. 12 is a cross-sectional view illustrating a product tire of a modified example.

### DESCRIPTION OF EMBODIMENTS

Examples of embodiments of the present application are described in detail hereinafter with reference to the drawings.

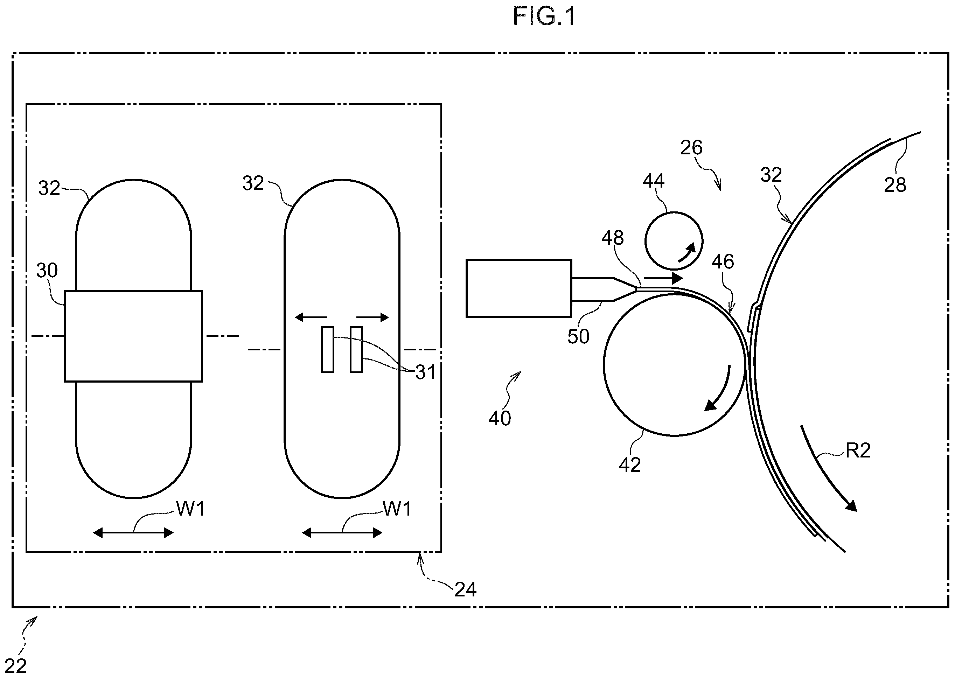

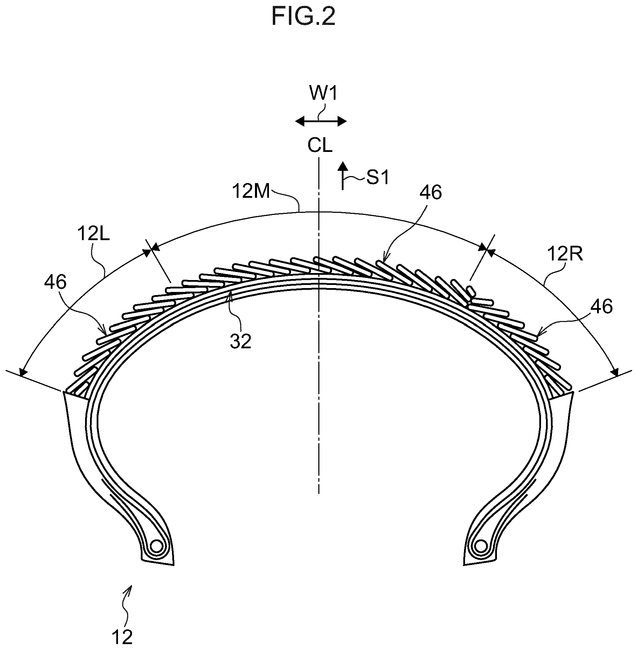

A raw tire manufacturing device 22 of a first embodiment is illustrated in Fig. 1. Further, a raw tire 12 manufactured by the raw tire manufacturing device 22 is illustrated in Fig. 2. This raw tire 12 is a raw tire obtained by a process of manufacturing a pneumatic tire for a motorcycle, and, as seen in a cross-section that includes the tire central axis, is a shape that is curved such that the center in the tire width direction (the arrow W1 direction) is convex toward the outer side (the arrow S1 direction).

As illustrated in Fig. 1, the raw tire manufacturing device 22 of the first embodiment has a textile treatment winding device 24 and a ribbon winding device 26. The textile treatment winding device 24 is an example of the strip-shaped body winding device.

At the textile treatment winding device 24, a forming drum 28 that is used in manufacturing the raw tire 12 (refer to the ribbon winding device 26 illustrated at the right side in Fig. 1) is rotated in a given direction by an unillustrated rotating/driving device. When viewing this forming drum 28 in a cross-section that includes the rotation central axis, the outer peripheral portion of the forming drum 28 curves such that the width direction center thereof is convex toward the outer side, in correspondence with the raw tire 12 (see Fig. 2). Note that the axial direction of the forming drum 28 coincides with the tire width direction (the arrow W1 direction).

A textile treatment 32 is supplied onto the forming drum 28 by an unillustrated supplying device, and is wound onto the forming drum 28 in the circumferential direction by a winding roller 30. The textile treatment 32 is an example of the strip-shaped body. The width of the winding roller 30 is wider than the width of the textile treatment 32.

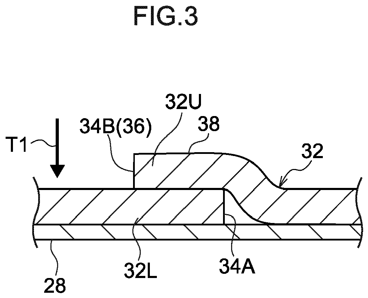

The textile treatment 32 is an elongated member that extends in a direction running along the outer peripheral surface of the forming drum 28 for example, and is wound onto the forming drum 28 while being tensed in the longitudinal direction. In this case, the length of the textile treatment 32 may be shorter than the length of the outer peripheral surface of the forming drum 28, but there may be the textile treatment 32 that is longer in the winding direction than the length of the outer peripheral surface of the forming drum 28. Further, as illustrated in Fig. 3, the respective end portions in the winding direction (starting end portion 34A and final end portion 34B) are made to overlap one another. The overlapping portion is, in the subsequent step, pressed and joined by pressing rollers 31, and a joined portion 38 is formed. At the joined portion 38, the textile treatment 32 is two layers that are a lower layer treatment 32L positioned at the inner peripheral side of the forming drum 28, and an upper layer treatment 32U positioned at the outer peripheral side. Further, the final end portion 34B becomes a step 36 at the textile treatment 32.

Note that, in the first embodiment, in the direction of pressing the overlapping portion by the pressing rollers 31, the component in the thickness direction of the textile treatment 32 (the arrow T1 direction) is great. Accordingly, in the state after the overlapping portion has been pressed by the pressing rollers 31, the final end portion 34B stands-up substantially perpendicular with respect to the lower layer treatment 32L. Further, in the example illustrated in Fig. 1, the width of the pressing rollers 31 is narrower than the width of the textile treatment 32. However, in this case, due to the overlapping portion being pressed while the pressing rollers 31 are moved in the width direction of the forming drum 28, the overlapping portion can be joined and the joined portion 38 can be formed over the entire width direction.

In this way, the forming drum 28 on which the textile treatment 32 is wound is next sent to the ribbon winding device 26 as illustrated in Fig. 1.

The ribbon winding device 26 has an extruder 40, a holding roller 42 and a stretching roller 44. Further, at the ribbon winding device 26 as well, the forming drum 28 is rotated in a given direction (the arrow R2 direction) by an unillustrated rotating/driving device.

The extruder 40 extrudes raw rubber 48, which structures a ribbon 46 that is described later, from an extruding mouthpiece 50. The holding roller 42 is disposed a given interval apart from the forming drum 28. Further, the holding roller 42 is rotated by an unillustrated rotating/driving device in the direction opposite the forming drum 28.

The raw rubber 48 extruded from the extruding mouthpiece 50 is stretched to a predetermined width and thickness between the holding roller 42 and the stretching roller 44, and is made into the ribbon 46 that is strip-shaped. This ribbon 46 is fed to between the holding roller 42 and the forming drum 28. Then, accompanying the rotation of the forming drum 28 in the arrow R2 direction, the ribbon 46 is wound in the circumferential direction onto the textile treatment 32 while being held by the holding roller 42. Note that there may be a structure in which the stretching roller 44 is not provided.

Here, the forming drum 28 rotates in the arrow R2 direction, and the direction of winding the ribbon 46 is the direction in which the ribbon 46 runs up onto the step 36 (the arrow M1 direction). This "direction in which the ribbon 46 runs up onto the step 36" is also the direction in which the ribbon 46 is layered in order from the lower layer treatment 32L to the upper layer treatment 32U.

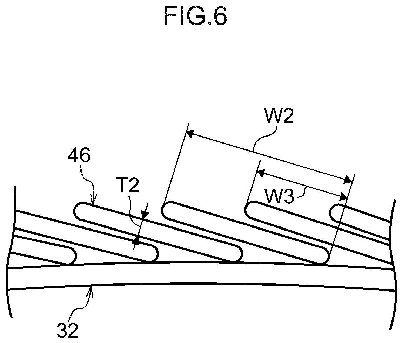

Width W2 (see Fig. 6) of the ribbon 46 is narrower than the width of the raw tire 12, and the ribbon 46 is continuous in the longitudinal direction, i.e., the direction of being extruded from the extruding mouthpiece 50. At the ribbon winding device 26, the ribbon 46 is wound plural times in a spiral form and layered onto the textile treatment 32 while the wound position thereof in the tire width direction is moved at a predetermined speed. In this way, the ribbon 46 can cover the outer peripheral side of the textile treatment 32. Note that the width W2 of the ribbon 46 is the length in the direction orthogonal to the longitudinal direction of the ribbon 46. Further, the width W2 is the length of the ribbon 46 along the axial direction of the forming drum 28, and is also the length in the direction orthogonal to the extruding direction.

Operation of the first embodiment is described next.

At the raw tire manufacturing device 22 of the first embodiment, the textile treatment 32 is wound onto the forming drum 28 by the textile treatment winding device 24.

In the state in which the textile treatment 32 is wound in this way, the overlapping portion of the textile treatment 32 is pressed and joined (stitched) by the pressing rollers 31, and the joined portion 38 is formed as illustrated in Fig. 3. Accordingly, the starting end portion 34A and the final end portion 34B of the textile treatment 32 can be joined strongly as compared with a structure in which, for example, the starting end portion 34A and the final end portion 34B are merely made to abut one another and joined without being overlapped. In particular, in a raw tire of a pneumatic tire for a motorcycle as is the case in the first embodiment, as illustrated in Fig. 2, the tire outer peripheral surface curves in the tire width direction, and therefore, it is often the case that it is difficult to abut and join the respective end portions (the starting end portion 34A and the final end portion 34B) of the textile treatment 32 together. In contrast, if the textile treatment 32 is made to overlap at the respective end portions thereof, the textile treatment 32 can be joined strongly at the starting end portion 34A and the final end portion 34B.

When the textile treatment 32 is made to overlap in this way and the joined portion 38 is formed, the step 36 is formed at the final end portion 34B at the textile treatment 32 as illustrated in Fig. 3.

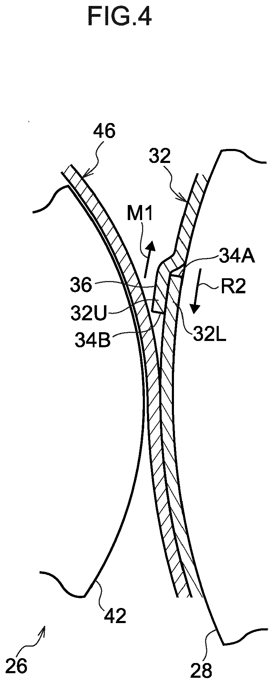

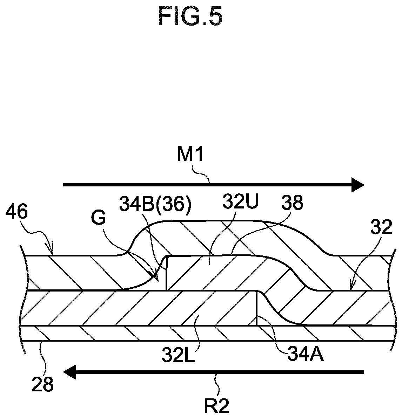

At the ribbon winding device 26, as illustrated in Fig. 4 and Fig. 5, the ribbon 46 is wound onto the textile treatment 32. The forming drum 28 is rotated in the arrow R2 direction, and the ribbon 46 is wound onto the textile treatment 32 in the direction of running up onto the step 36 (in the arrow M1 direction). Due thereto, a portion of the raw rubber that structures the ribbon 46 enters into gap G that is formed between the ribbon 46 and the textile treatment 32, and this gap G becomes small.

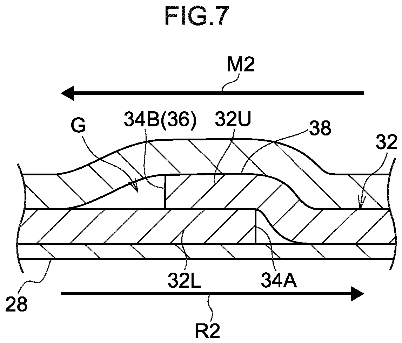

Here, the relationship between the step 36 and the direction of winding the ribbon 46 at a raw tire manufacturing device of a first comparative example is illustrated in Fig. 7.

In the first comparative example, the rotating direction of the forming drum 28 (the direction indicated by arrow R2) is opposite that of the case of the first embodiment illustrated in Fig. 5, and the direction of winding the ribbon 46 (the arrow M2 direction) is the direction of descending down off of the step 36. Namely, the ribbon 46 is wound in the direction of being layered in order from the upper layer treatment 32U to the lower layer treatment 32L. Accordingly, at the gap G, force in the direction of moving away from the step 36 is applied to the ribbon 46, and the gap G becomes larger. Due to the gap G becoming larger in this way, the amount of air trapped due to the step 36 also becomes larger.

In contrast, in the first embodiment, the direction of winding the ribbon 46 is the direction in which the ribbon 46 runs up onto the step 36 as illustrated by arrow M1 in Fig. 5. Accordingly, force in the direction of approaching the step 36 is applied to the ribbon 46 at the portion of the gap G, and, as a result of the raw rubber of the ribbon 46 entering into the portion where the gap G is formed, the gap G becomes smaller. In the first embodiment, because the gap G becomes smaller in this way, the amount of air trapped due to the step 36 also becomes smaller than in the case of the comparative example.

In particular, in the first embodiment, if the rotating direction (the arrow R2 direction) of the forming drum 28 at the ribbon winding device 26 is set, the winding direction of the ribbon 46 can be easily determined to be the direction opposite the rotating direction of the forming drum 28.

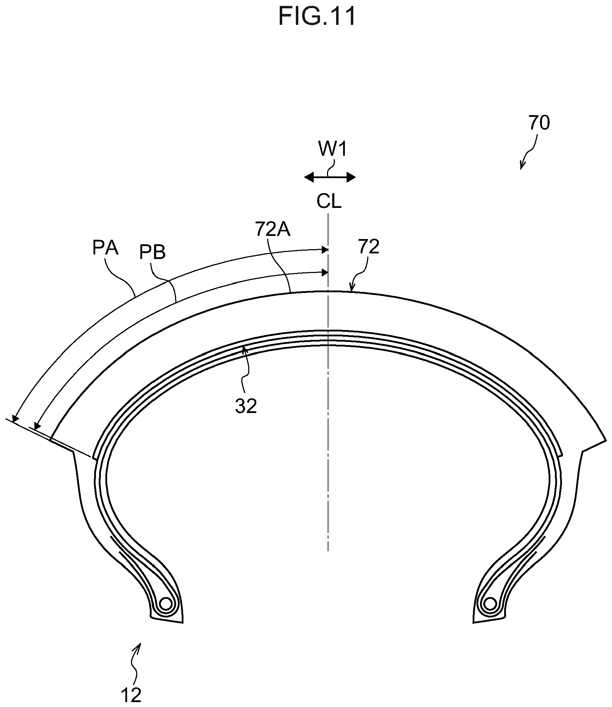

The raw tire 12 manufactured by using the raw tire manufacturing device 22 as described above undergoes a vulcanization process and the like, and becomes the final product (product tire 70). An example of the cross-sectional shape of the product tire 70 is illustrated in Fig. 11. Note that the cross-sectional shape of the product tire 70 is not limited to the shape of Fig. 11. Reference numeral 72 in Fig. 11 is the tread of the product tire 70. This tread 72 is the ribbon 46 that has been vulcanization-molded. Further, reference symbol PA in Fig. 11 is the length of half of the peripheral length of tread surface 72A of the tread 72, and reference symbol PB is the length of half of the peripheral length of the textile treatment 32 after vulcanization. Note that what is called the peripheral length of the tread surface 72A here is the length measured from one end to the other end of the tread surface 72A along the tread surface 72A, in a cross-section in the tire width direction of the product tire 70. Namely, the length of half of the peripheral length of the tread surface 72A of the tread 72 is the length measured along the tread surface 72A from one end portion of the tread surface 72A to a tire center line (in other words, the tire equatorial plane) CL. Further, what is here called the peripheral length of the textile treatment 32 after vulcanization is the length measured from one end to the other end of the textile treatment 32 along the surface (in other words, the tire radial direction outer surface) of the textile treatment 32, in a cross-section in the tire width direction of the product tire 70. Namely, the length of half of the peripheral length of the textile treatment 32 is the length measured along the surface of the textile treatment 32 from one end portion of the textile treatment 32 to the tire center line CL. At the product tire 70, the length PB is greater than or equal to 75% of the length PA. Note that the length PB is preferably from 75% to 100% of the length PA. Here, by manufacturing the raw tire such that the length PB of the product tire 70 is greater than or equal to 75% of the length PA, air becoming mixed into the product tire 70 is suppressed.

A second embodiment is described next. In the second embodiment, elements, members and the like that are similar to those of the first embodiment are denoted by the same reference numerals, and detailed description thereof is omitted. Further, because the overall structure of the raw tire manufacturing device of the second embodiment is similar to that of the first embodiment, illustration thereof is omitted.

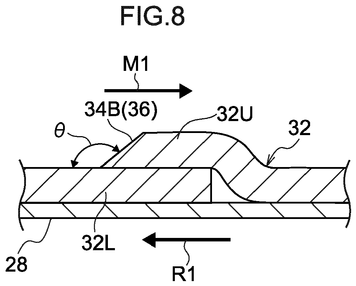

In the second embodiment, the structure of the textile treatment winding device differs from that of the first embodiment. Concretely, in the second embodiment, as illustrated partially in Fig. 8, the direction of pressing by the pressing rollers 31 (the direction of pressing the overlapping portion of the textile treatment 32) has a larger component in the direction of running up onto the step 36 (the arrow M1 direction) than in the first embodiment.

For example, at the time of joining the joined portion 38, the joined portion 38 is pressed by the pressing rollers 31 while the forming drum 28 is rotated in the arrow R2 direction illustrated in Fig. 1. In this case, if the rotating speed of the forming drum 28 is made to be a sufficient rotating speed, the pressing rollers 31 relatively have an even greater pressing component in the arrow M1 direction. Further, the central shafts of the pressing rollers 31 may be urged in the arrow M1 direction by unillustrated springs or the like. By such measures, the pressing direction of the pressing rollers 31 can be made to have a component in the arrow M1 direction.

Due thereto, in the second embodiment, the surface that forms the step 36, i.e., the final end portion 34B, is inclined so as to face the tire radial direction outer side.

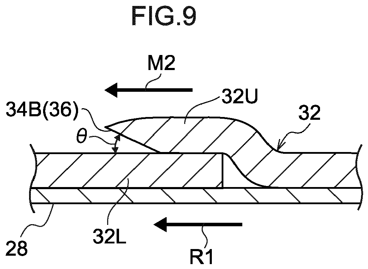

Here, the joined portion of the textile treatment 32, which is joined by a textile treatment winding device of a second comparative example, is illustrated in Fig. 9.

In the second comparative example, the direction of pressing by the pressing rollers 31 has a greater component in the direction of descending down off of the step 36 (the arrow M2 direction). Accordingly, the surface that forms the step 36, i.e., the final end portion 34B, is inclined so as to face the tire radial direction inner side. In other words, angle of inclination of the final end portion 34B is an acute angle. Therefore, in a case of winding the ribbon 46 by the ribbon winding device 26 (see Fig. 1), it is difficult for the raw rubber that structures the ribbon 46 to enter into the gap G (see Fig. 5).

In contrast, in the second embodiment, as illustrated in Fig. 8, the angle of inclination of the final end portion 34B of the textile treatment 32 is an obtuse angle. Therefore, in a case of winding the ribbon 46 by the ribbon winding device 26 (see Fig. 1), it is easy for the raw rubber that structures the ribbon 46 to enter into the gap G (see Fig. 5), and a structure in which the amount of trapped air is smaller can be realized.

Note that, in the technique of the present disclosure, there are cases in which different types of the ribbons 46 are wound on the textile treatment 32. For example, the raw tire 12 illustrated in Fig. 2 is an example in which the ribbons 46 of different types are wound in this way. Concretely, the directions of winding the ribbons 46 differ at the portion from tire width direction central portion 12M to shoulder portion 12L that is at the left side in the drawing, and at shoulder portion 12R that is at the right side in the drawing.

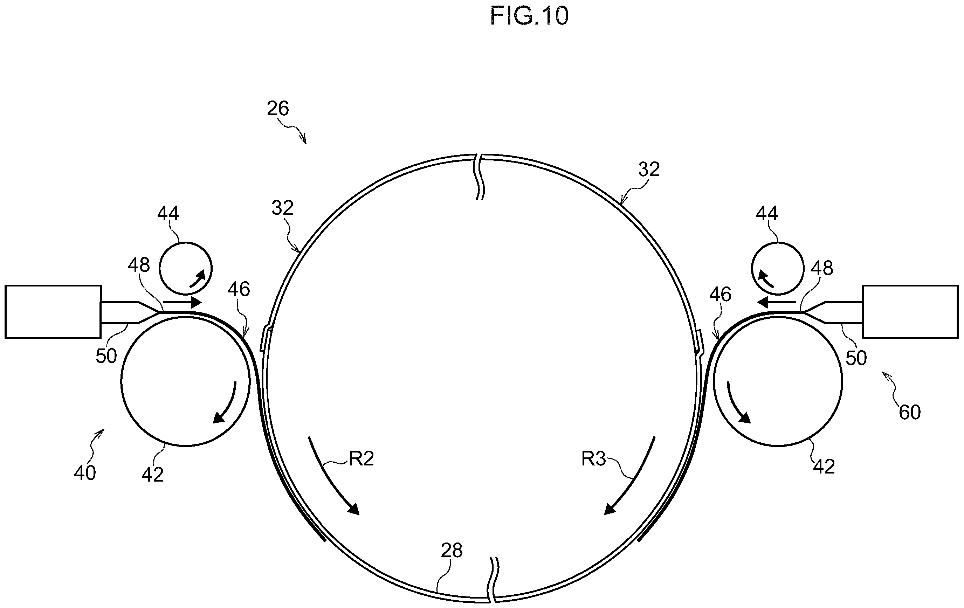

In a case of manufacturing such a raw tire 12, as in the modified example illustrated in Fig. 10, at the ribbon winding device 26, there are cases in which an additional extruder 60 is disposed at the side opposite the extruder 40 in the radial direction of the forming drum 28. At the time of winding the ribbon 46, which is fed from the facing extruder 60, onto the textile treatment 32, the forming drum 28 is rotated in the arrow R3 direction. Accordingly, the ribbon 46 is wound onto the textile treatment 32 in the direction of descending down off of the step 36 with respect to the textile treatment 32 (the direction of heading from the upper layer treatment 32U to the lower layer treatment 32L illustrated in Fig. 3).

In a case in which directions of winding the ribbons 46 are both the direction of running up onto the step 36 and the direction of descending down off of the step 36 in this way, it suffices to set appropriate directions of winding the ribbons 46, for example, in consideration of the state of usage of the pneumatic tire for a motorcycle that is ultimately obtained. As an example, in a pneumatic tire for a motorcycle, the tire width direction central portion is the portion that contacts the ground at the time of straight traveling, i.e., traveling at high speed. Accordingly, at the tire width direction central portion, it suffices to set the winding direction (the rotating direction of the forming drum 28) such that the ribbon 46 is wound in the direction of running up onto the step 36.

In the technique of the present disclosure, the height of the step 36, the width W2 and thickness T2 of the ribbon 46, the overlap ratio, and the pressure of pressing the ribbon 46 can be within the ranges listed in Table 1 as examples. Note that what is called overlap ratio here is, as illustrated in Fig. 6, the proportion of the length of overlapping portion W3 with respect to the width W2 of the ribbon 46, as seen in a cross-section that includes the tire center line. Further, the pressure of pressing the ribbon 46 is the pressure along the radial direction of the forming drum 28 that is applied from the ribbon 46 to the overlapping portion of the textile treatment 32.

**[Table 1]**

| | |
|---|---|
| height of step | from 1.0 to 6.0 mm |
| width of ribbon | from 15 mm to 24 mm |
| thickness of ribbon | from 1.0 mm to 1.8 mm |
| overlap ratio of ribbon | from 10% to 75% |
| pressure of pressing ribbon | from 0.4 MPa to 0.6 MPa |

For example, in a case in which the ribbon 46 is layered on the textile treatment 32 by the holding roller 42, the outer peripheral surface of the holding roller 42 is cylindrical, whereas the outer peripheral surface of the forming drum 28 is curved so as to be convex toward the outer peripheral side. Accordingly, if the width of the ribbon 46 is wide, it is difficult to cause the width direction both side portions of the ribbon 46 to contact the textile treatment 32 by pressing. By making the width of the ribbon 46 be less than or equal to 24 mm, as compared with a case in which the width exceeds 24 mm, the width direction respective end portions of the ribbon 46, i.e., the regions that are far from the pressed portion at the width direction center, are small, and the surface area at which the ribbon 46 can be strongly pressed on the textile treatment 32 can be ensured. Due thereto, the raw rubber of the ribbon 46 can reliably be made to enter into the gap G.

Further, by making the width W2 of the ribbon 46 be greater than or equal to 15 mm, the wound surface area per winding of one time around can be ensured to be wide, as compared with a case in which the width is less than 15 mm. Due thereto, the number of times of winding in a case in which the outer periphery of the textile treatment 32 is covered by the ribbon 46 is smaller, and the mass producibility can be improved.

Further, by making the overlap ratio, i.e., the ratio of the overlapping portion in the width direction of the ribbon 46, be greater than or equal to 10% of the width W2, the overlapping portion in the width direction of the ribbon 46 is wide as compared with a case in which the overlap ratio is less than 10%. Because the overlapping portion of the ribbon 46 is large, an amount of the raw rubber that is sufficient for reliably entering into the gap G can be ensured at the ribbon 46. Further, by making the overlap ratio of the ribbon 46 be less than or equal to 75%, as compared with a case in which the overlap ratio exceeds 75%, an excessive overlapping portion is not formed in the winding of one time, and therefore, the number of times the ribbon 46 is wound is smaller, and the mass producibility can be improved. Note that what is called "overlapping portion" here is, at adjacent portions of the ribbon 46 that are adjacent in the width direction of the forming drum 28 (e.g., the nth portion of the ribbon 46 and the (n+1)st portion of the ribbon 46 in the width direction), the portion where the width direction end portions of these two portions of the ribbon 46 overlap one another.

By making the thickness T2 of the ribbon 46 be greater than or equal to 1.0 mm, as compared with a case in which the thickness T2 is less than 1.0 mm, a thickness of the ribbon 46, i.e., an amount of the raw rubber 48, that is sufficient in order to enter into the gap G can be ensured. Further, by making the thickness T2 of the ribbon 46 be less than or equal to 1.8 mm, as compared with a case in which the thickness T2 exceeds 1.8 mm, the steps of the overlapping portions of the ribbon 46 itself, which steps form at the outer peripheral sides of the ribbon 46, are small.

By making the height of the step 36 be less than or equal to 6.0 mm, the step is small as compared with a case in which the step height exceeds 6.0 mm. Due thereto, the amount of air trapped due to the step 36 can be made to be small. Further, the step 36 is substantially formed at the thickness of the textile treatment 32. Accordingly, a structure in which the height of the step 36 is greater than or equal to 1.0 mm is a structure in which the thickness of the textile treatment 32 also can substantially be ensured to be thick. Further, even in a structure in which the thickness of the textile treatment 32 is made to be thick in this way, the amount of air trapped due to the step 36 can be reduced in the technique of the present disclosure.

The pressure of pressing the ribbon 46 by the holding roller 42 (the pressure by which the ribbon 46 is pressed against the textile treatment 32) is preferably from 0.1 MPa to 0.6 MPa, and is more preferably from 0.4 MPa to 0.6 MPa. By making the pressure of pressing the ribbon 46 by the holding roller 42 be greater than or equal to 0.1 MPa, it is easy to make the ribbon 46 enter into the gap G as compared with a case in which the pressing pressure is less than 0.1 MPa. Further, by making the pressure of pressing the ribbon 46 be greater than or equal to 0.4 MPa, the ribbon 46 can reliably be made to enter into the gap G as compared with a case in which the pressing pressure is less than 0.4 MPa. Further, by making the pressing pressure of the ribbon 46 be less than or equal to 0.6 MPa, as compared with a case in which the pressing pressure exceeds 0.6 MPa, excessive pressing of the ribbon 46 is suppressed, and deformation of the ribbon 46 can be prevented. The pressure of pressing the ribbon 46 by the holding roller 42 is preferably from 0.1 MPa to 0.6 MPa, but is not limited to this range. In other words, it suffices to be able to make the ribbon 46 reliably enter into the gap G, and, for example, the pressing pressure may be less than 0.1 MPa. Further, cases in which the pressing pressure is made to exceed 0.6 MPa in order to make the ribbon 46 reliably enter into the gap G also are possible.

The above-described height of the step 36 and respective numerical values relating to the ribbon 46 can be combined appropriately within the respective ranges. For example, even in a case in which the height of the step 36 is 6 mm, provided that the thickness of the ribbon 46 is greater than or equal to 1.0 mm, a thickness of the ribbon 46 that is sufficient for entering into the gap G can be ensured. Further, even in a case in which the height of the step 36 is 1 mm and the thickness of the ribbon 46 is greater than or equal to 1.8 mm, the steps at the portions where the ribbon 46 itself overlaps, which are formed at the outer peripheral sides of the ribbon 46, can be kept within a range that is allowable for the raw tire 12.

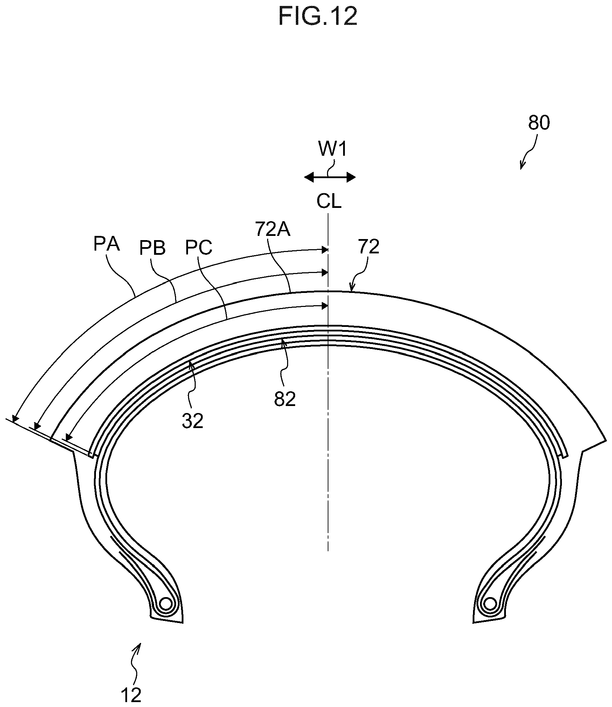

At the raw tire 12 of the above-described embodiment, as illustrated in Fig. 11, the textile treatment 32 is disposed on a carcass. However, the present disclosure is not limited to this structure. An unvulcanized belt may be disposed between the carcass and the textile treatment 32. A final product (product tire 80) that is manufactured by such a raw tire undergoing a vulcanization process and the like is illustrated in Fig. 12. As illustrated in Fig. 12, at the product tire 80, belt 82 is disposed between the carcass and the textile treatment 32. Reference symbol PC is the length of half of the peripheral length of the belt 82 that is after vulcanization. Note that what is called the peripheral length of the belt 82 after vulcanization here is the length measured from one end to the other end of the belt 82 along the surface (in other words, the tire radial direction outer surface) of the belt 82, in a cross-section in the tire width direction of the product tire 80. Namely, the length of half of the peripheral length of the belt 82 is the length measured along the surface of the belt 82 from one end portion of the belt 82 to the tire center line CL. At the product tire 80, the length PB is greater than or equal to the smaller value among a value that is 75% of the length PA and a value that is the sum of the length PC and 4 mm. Here, air becoming mixed into the product tire 80 is suppressed by manufacturing the raw tire 12 such that the length PB of the product tire 80 is greater than or equal to the smaller value among a value that is 75% of the length PA and a value that is the sum of the length PC and 4 mm. Note that the belt 82 may be formed by plural belt plies, or may be formed by a single belt ply. If the belt 82 is formed by plural belt plies, PC is the value of half of the peripheral length of the belt ply that is at the outermost side in the tire radial direction.

The following notes are further provided in relation to the above-described embodiments.

### (Note 1)

A method of manufacturing a raw tire, the method comprising:
winding a strip-shaped body on a forming drum in a circumferential direction, and overlapping and joining together respective end portions of the strip-shaped body in a winding direction so as to form a joined portion; and
layering a ribbon on the strip-shaped body by winding the ribbon on the strip-shaped body in a direction in which the ribbon runs up onto a step of an end portion that is positioned at a radial direction outer side among the respective end portions configuring the joined portion.

In this method of manufacturing a raw tire, respective end portions of the strip-shaped body in the winding direction are overlapped and joined together, and the joined portion is formed. Accordingly, the respective end portions of the strip-shaped body in the winding direction can be joined strongly as compared with a structure in which the respective end portions are made to abut one another and joined together. For example, the respective end portions of the strip-shaped body in the winding direction can be joined reliably even at a tire of a shape in which the center in the tire width direction is curved so as to be convex toward the outer peripheral side.

Further, in this method of manufacturing a raw tire, the ribbon is wound and layered on the strip-shaped body that has been wound on the forming drum. At this time, at the joined portion of the strip-shaped body, a step is formed at the end portion that is positioned at the radial direction outer side among the respective end portions that structure the joined portion. Because the ribbon is wound in the direction of running up onto the step, it is easy for the ribbon to enter into the step as compared with a structure in which the ribbon is wound in the opposite direction, i.e., the direction of descending down off of the step. Namely, the amount of air that is trapped due to the step can be reduced.

### (Note 2)

The method of manufacturing a raw tire of Note 1, wherein a width of the ribbon along an axial direction of the forming drum is from 15 mm to 24 mm.

In a case of layering a ribbon on a strip-shaped body, there are often cases in which the central portion in the width direction is pressed. By making the width of the ribbon be less than or equal to 24 mm, as compared with a case in which the width exceeds 24 mm, the width direction respective end portions, i.e., the regions that are far from the pressed portion at the width direction center, are small, and the surface area at which the ribbon can be strongly pressed on the strip-shaped body can be ensured. Due thereto, the ribbon can reliably be made to enter into the gap.

Further, by making the width of the ribbon be greater than or equal to 15 mm, the wound surface area per winding of one time around can be ensured to be wide, as compared with a case in which width is less than 15 mm. Due thereto, the number of times of winding in a case in which the outer periphery of the strip-shaped body is covered by the ribbon is smaller, and the mass producibility can be improved.

### (Note 3)

The method of manufacturing a raw tire of Note 1 or Note 2, wherein the ribbon is wound onto the strip-shaped body while, at portions of the ribbon that are adjacent to one another in an axial direction of the forming drum, overlapping width direction end portions of the ribbon within a range of from 10% to 75% of a width of the ribbon.

By making the overlapping portion of the ribbon be greater than or equal to 10% of the width, the overlapping portion in the width direction of the ribbon can be ensured to be wide as compared with a case in which the overlapping portion is less than 10%. Because the overlapping portion of the ribbon is large, the ribbon can reliably be made to enter into the step of the strip-shaped body. Further, by making the overlapping portion of the ribbon be less than or equal to 75% of the width, as compared with a case in which the overlapping portion exceeds 75%, excessive overlapping does not arise in the winding of one time, and therefore, the number of times the ribbon is wound is smaller, and the mass producibility can be improved.

### (Note 4)

The method of manufacturing a raw tire of any one of Note 1 through Note 3, wherein a thickness of the ribbon along a radial direction of the forming drum is from 1.0 mm to 1.8 mm.

By making the thickness of the ribbon be greater than or equal to 1.0 mm, as compared with a case in which the thickness is less than 1.0 mm, a thickness, i.e., an amount of the raw rubber, that is sufficient in order to enter into the gap can be ensured. Further, by making the thickness of the ribbon be less than or equal to 1.8 mm, as compared with a case in which the thickness exceeds 1.8 mm, the steps of the overlapping portions of the ribbon itself, which form at the outer peripheral sides of the ribbon, are small.

### (Note 5)

The method of manufacturing a raw tire of any one of Note 1 through Note 4, wherein a height of the step along a radial direction of the forming drum is from 1.0 mm to 6.0 mm.

By making the height of the step be less than or equal to 6.0 mm, the step is small as compared with a case in which the step height exceeds 6.0 mm, and therefore, the amount of air trapped due to the step can be made to be small. Further, because this step is substantially formed at the thickness of the strip-shaped body, in a structure in which the height of the step is greater than or equal to 1.0 mm, the thickness of the strip-shaped body also can substantially be ensured to be thick. Further, even in a structure in which the thickness of strip-shaped body is thick, the amount of air that is trapped due to the step can be reduced.

### (Note 6)

The method of manufacturing a raw tire of any one of Note 1 through Note 5, wherein the ribbon is layered onto the strip-shaped body under a pressing pressure along a radial direction of the forming drum of from 0.4 MPa to 0.6 MPa.

By making the pressure of pressing the ribbon be greater than or equal to 0.4 MPa, the ribbon can reliably be made to enter into the gap as compared with a case in which the pressing pressure is less than 0.4 MPa. Further, by making the pressure of pressing the ribbon be less than or equal to 0.6 MPa, excessive pressing of the ribbon is suppressed, and deformation of the ribbon can be prevented, as compared with a case in which the pressing pressure exceeds 0.6 MPa.

### (Note 7)

The method of manufacturing a raw tire of any one of Note 1 through Note 6, wherein an overlapping portion of the ribbon is pressed toward a direction of running up onto the step, and the strip-shaped body is joined at the respective end portions.

The overlapping portion of the ribbon is pressed toward the direction of running up onto the step of the overlap. Therefore, the step is formed such that the surface of the step is inclined so as to face the tire radial direction outer side. Due thereto, a step shape that is such that the ribbon can easily enter into the step can be formed.

### (Note 8)

A raw tire manufacturing device comprising:
a forming drum;
a strip-shaped body winding device that winds a strip-shaped body onto the forming drum in a circumferential direction, and overlaps and joins together respective end portions of the strip-shaped body in a winding direction so as to form a joined portion; and
a ribbon winding device that layers a ribbon on the strip-shaped body, which has been wound on the forming drum by the strip-shaped body winding device, by winding the ribbon on the strip-shaped body in a direction in which the ribbon runs up onto a step of an end portion that is positioned at a radial direction outer side among the respective end portions configuring the joined portion.

In this raw tire manufacturing device, a strip-shaped body is wound on the forming drum in the circumferential direction by the strip-shaped body winding device. At this time, the strip-shaped body winding device overlaps and joins together the respective end portions in the winding direction, and forms the joined portion. Accordingly, the respective end portions of the strip-shaped body in the winding direction can be joined strongly as compared with a structure in which the respective end portions are made to abut one another and joined together. For example, the respective end portions of the strip-shaped body in the winding direction can be joined reliably even at a tire of a shape in which the center in the tire width direction is curved so as to be convex toward the outer peripheral side.

Further, a ribbon is wound onto the strip-shaped body by the ribbon winding device. At the joined portion of the strip-shaped body, a step is formed at the end portion that is positioned at the radial direction outer side among the respective end portions that structure the joined portion. Because the ribbon winding device winds the ribbon in the direction of running up onto the step, it is easy for the ribbon to enter into the step as compared with a structure in which the ribbon is wound in the opposite direction, i.e., the direction of descending down off of the step. Namely, the amount of air trapped due to the step can be reduced.

### (Note 9)

The raw tire manufacturing device of Note 8, wherein the strip-shaped body winding device presses an overlapping portion of the ribbon toward a direction of running up onto the step, and joins the strip-shaped body at the respective end portions.

The strip-shaped body winding device presses the overlapping portion of the ribbon toward the direction of running up onto the step of the overlap. Therefore, the step is formed such that the surface of the step is inclined so as to face the tire radial direction outer side. Due thereto, a step shape that is such that the ribbon can easily enter into the step can be formed.

Note that the disclosure of Japanese Patent Application No. 2021-202871 filed on December 14, 2021 is, in its entirety, incorporated by reference into the present specification. All publications, patent applications, and technical standards mentioned in the present specification are incorporated by reference into the present specification to the same extent as if such individual publication, patent application, or technical standard was specifically and individually indicated to be incorporated by reference.

## Claims

1. A method of manufacturing a raw tire, the method comprising:
winding a strip-shaped body on a forming drum in a circumferential direction, and overlapping and joining together respective end portions of the strip-shaped body in a winding direction so as to form a joined portion; and
layering a ribbon on the strip-shaped body by winding the ribbon on the strip-shaped body in a direction in which the ribbon runs up onto a step of an end portion that is positioned at a radial direction outer side among the respective end portions configuring the joined portion.

2. The method of manufacturing a raw tire of Claim 1, wherein a width of the ribbon along an axial direction of the forming drum is from 15 mm to 24 mm.

3. The method of manufacturing a raw tire of Claim 1 or Claim 2, wherein the ribbon is wound onto the strip-shaped body while, at portions of the ribbon that are adjacent to one another in an axial direction of the forming drum, overlapping width direction end portions of the ribbon within a range of from 10% to 75% of a width of the ribbon.

4. The method of manufacturing a raw tire of any one of Claim 1 through Claim 3, wherein a thickness of the ribbon along a radial direction of the forming drum is from 1.0 mm to 1.8 mm.

5. The method of manufacturing a raw tire of any one of Claim 1 through Claim 4, wherein a height of the step along a radial direction of the forming drum is from 1.0 mm to 6.0 mm.

6. The method of manufacturing a raw tire of any one of Claim 1 through Claim 5, wherein the ribbon is layered onto the strip-shaped body under a pressing pressure along a radial direction of the forming drum of from 0.1 MPa to 0.6 MPa.

7. The method of manufacturing a raw tire of any one of Claim 1 through Claim 6, wherein an overlapping portion of the ribbon is pressed toward a direction of running up onto the step, and the strip-shaped body is joined at the respective end portions.

8. A raw tire manufacturing device, comprising:
a forming drum;
a strip-shaped body winding device that winds a strip-shaped body onto the forming drum in a circumferential direction, and overlaps and joins together respective end portions of the strip-shaped body in a winding direction so as to form a joined portion; and
a ribbon winding device that layers a ribbon on the strip-shaped body, which has been wound on the forming drum by the strip-shaped body winding device, by winding the ribbon on the strip-shaped body in a direction in which the ribbon runs up onto a step of an end portion that is positioned at a radial direction outer side among the respective end portions configuring the joined portion.

9. The raw tire manufacturing device of Claim 8, wherein the strip-shaped body winding device presses an overlapping portion of the ribbon toward a direction of running up onto the step, and joins the strip-shaped body at the respective end portions.
